# EUROPÄISCHE PATENTSCHRIFT

(11) **EP 2 138 745 B1**
(45) Veröffentlichungstag und Bekanntmachung des Hinweises auf die Patenterteilung: **04.05.2011**
(21) Anmeldenummer: 09008244.7
(22) Anmeldetag: 24.06.2009
(51) Int. Cl.: F16J 15/08

(54) **Zylinderkopfdichtung**
Cylinder head gasket
Joint de culasse

(30) Priorität: 28.06.2008 DE 102008030787
(43) Veröffentlichungstag der Anmeldung: 30.12.2009
(73) Patentinhaber: ElringKlinger AG, 72581 Dettingen (DE)
(72) Erfinder: Schumacher, Thomas, 72585 Riederich (DE); Bendl, Klaus, 75038 Oberderdingen (DE)
(74) Vertreter: Hoeger, Stellrecht & Partner Patentanwälte

(56) Entgegenhaltungen:
- EP-A- 0 713 988
- EP-A- 0 940 608
- EP-A- 1 308 653
- EP-A- 1 561 975

## Beschreibung

Die Erfindung betrifft eine Zylinderkopfdichtung mit einer mit mehreren Brennraumöffnungen versehenen Dichtungsplatte, welche eine einzige, sich mindestens im Wesentlichen über die gesamte Dichtungsplatte erstreckende Metallblechlage aufweist, von der zur Bildung von Brennraum-Dichtelementen jeweils ein die jeweilige Brennraumöffnung umschließender Öffnungsrandbereich um- und auf die Blechlage zurückgefaltet ist, so dass jedes Brennraum-Dichtelement einen einem Umlagebasisbereich der Blechlage gegenüberliegenden Umlageflansch aufweist, wobei zur Bildung von Zylinderkopf-Abstützelementen im Abstand von einem die Brennraumöffnungen enthaltenden Bereich der Dichtungsplatte Randbereiche der Blechlage um- und auf die Blechlage zurückgefaltet sind, und wobei an derBlechlage mindestens eine elastomere Dichtraupe zur Abdichtung um mindestens eine Fluidöffnung der Dichtungsplatte herum angebracht ist.

Derartige Zylinderkopfdichtungen ergeben sich aus der EP-0 557 918-A der ELRING DICHTUNGSWERKE GMBH, aber auch aus der EP-0 713 988-A.

Der Konstrukteur einer Zylinderkopfdichtung, dem der Motor, für den die Zylinderkopfdichtung zu konstruieren ist, vorgegeben wird, ist mit mehreren Problemen konfrontiert:
Bei modernen Motoren, welche gewichtssparend konstruiert werden, sind häufig der Motorblock, vor allem aber auch der Zylinderkopf, bereichsweise nicht besonders verformungssteif. Da die Pressungskräfte, mit denen die Zylinderkopfdichtung zwischen dem Motorblock und dem Zylinderkopf eingespannt ist, punktuell, nämlich durch die Zylinderkopfschrauben, aufgebracht werden, sind diese Pressungskräfte in den Bereichen der Zylinderkopfschrauben am höchsten und können in den Bereichen zwischen den Zylinderkopfschrauben (im Folgenden als Zwischenschraubenbereiche bezeichnet) deutlich abfallen. Dies gilt vor allem für solche Zwischenschraubenbereiche, in denen oder in deren Nachbarschaft der Motorblock und/oder der Zylinderkopf aufgrund von Hohlräumen, wie Brennräume und Hohlräume für Kühlwasser oder Motoröl, nicht besonders verformungssteif ist bzw. sind. Vor allem in den Bereichen der Brennraum-Dichtelemente, durch welche gegen die höchsten Drücke, nämlich den Gasdruck der Verbrennungsgase, abgedichtet werden muss, kann ein übermäßiger Abfall der auf die Zylinderkopfdichtung einwirkenden Pressungskräfte zum undicht werden des Motors führen.

Ein weiteres Problem ist bei sogenannten Buchsenmotoren zu berücksichtigen, bei welchen der im Motorblock liegende Bereich der Verbrennungsräume von in den Motorblock eingesetzten Zylinderlaufbuchsen gebildet wird. Um eine Zylinderlaufbuchse in ihrer axialen Richtung in einem Motorblock festzulegen, sind aus dem Stand der Technik die folgenden Konstruktionen bekannt: Bei einem ersten Typ einer Zylinderlaufbuchse hat diese an ihrem einen, dem Zylinderkopf zugewandten axialen Endbereich, an dessen axiale Stirnfläche angrenzend, einen Ringbund, mit welchem die Laufbuchse auf eine ringförmige Schulter des Motorblocks aufgesetzt wird - im Bereich dieser ringförmigen Schulter erweitert sich der Durchmesser des die Laufbuchse aufnehmenden Motorblock-Hohlraums sprungartig, das heißt dieser Hohlraum hat in seinem dem Zylinderkopf zugewandten Endbereich einen größeren Durchmesser als jenseits dieser Schulter. Solche Laufbuchsen (im englischen Sprachgebiet als "liner" bezeichnet) werden in der Fachsprache als Top-Stop Liner bezeichnet.

Zwei weitere bekannte Typen von Zylinderlaufbuchsen werden als Mid-Stop Liner bzw. als Bottom-Stop Liner bezeichnet; im erstgenannten Fall stützt sich die Laufbuchse in einem Mittelbereich ihrer axialen Länge am Motorblock ab, im zweiten Fall in ihrem unteren, vom Zylinderkopf abgewandten axialen Endbereich.

Wenn im Zuge der Montage eines Laufbuchsenmotors der Zylinderkopf montiert wird und die Zylinderkopfschrauben angezogen werden, werden die Laufbuchsen aufgrund der auf die Zylinderkopfdichtung im Bereich der Brennraum-Dichtelemente einwirkenden hohen Pressungskräfte, welche in die Laufbuchsen eingeleitet werden, in axialer Richtung vorgespannt. Da die Laufbuchsen nicht als absolut starre Bauteile betrachtet werden können, wirken die Vorspannkräfte bei Mid-Stop Linern und bei Bottom-Stop Linern auf verhältnismäßig lange axiale Abschnitte der Laufbuchsen ein, so dass diese über ihren ganzen Umfang oder nur in Umfangsbereichen zurückfedern können, wenn im Motorbetrieb bei der Zündung eines Zylinders in dessen Bereich der Zylinderkopf sich etwas vom Motorblock entfernt bzw. in den Zwischenschraubenbereichen Umfangsbereiche der Laufbuchsen in axialer Richtung weniger stark gepresst werden als in den Zylinderkopfschrauben benachbarten Bereichen. Deshalb können Mid-Stop Liner und Bottom-Stop Liner einen gewissen Beitrag zur Vergleichmäßigung der um die Brennraumöffnungen herum auf die Zylinderkopfdichtung einwirkenden Pressungskräfte leisten, und zwar nicht nur bei stillstehendem Motor, sondern auch im Motorbetrieb.

In der Vergangenheit wurde die mit Zylinderkopfdichtungen verbundene komplexe Problematik üblicherweise mit Zylinderkopfdichtungen gelöst, deren Dichtungsplatte von mehreren, aufeinander angeordneten Metallblechlagen gebildet wird, von denen mindestens eine aus Federstahlblech besteht und um Brennraumöffnungen herum in ihrer Höhe federelastisch verformbare Abdichtsicken aufweist. Aus Kostengründen wurde versucht, diese mehrlagigen Zylinderkopfdichtungen durch einlagige Dichtungen der eingangs definierten Art zu ersetzen, so wie sie auch in der EP-0 557 918-A und der EP-0 713 988-A beschrieben sind.

Die Erfinder der vorliegenden Erfindung stellten jedoch fest, dass diese bekannten Zylinderkopfdichtungen hinsichtlich ihrer Herstellung nicht unproblematisch sind und je nach Konstruktion des abzudichtenden Motors vor allem um die Brennräume herum die erforderliche Abdichtung insbesondere im Motorbetrieb nicht zuverlässig garantieren können.

Der Erfindung lag die Aufgabe zugrunde, Zylinderkopfdichtungen der eingangs definierten Art zu schaffen, welche sich problemlos herstellen lassen und von ihrer Grundkonzeption her so gestaltet sind, dass sie sich auch ohne weiteres an unterschiedliche Motorkonstruktionen anpassen lassen, insbesondere an sogenannte Buchsenmotoren der verschiedenen, vorstehend geschilderten Typen. Diese Aufgabe soll insbesondere für größere Motoren gelöst werden, wie sie in Nutzfahrzeugen eingesetzt werden.

Für Zylinderkopfdichtungen der eingangs definierten Art mit einem die jeweilige Brennraumöffnung umschließenden Beilageelement zwischen Umlageflansch und Umlagebasisbereich des betreffenden Brennraum-Dichtelements wird als nicht erfindungsgemäßes Beispiel vorgeschlagen, das Beilageelement als Federstahl-Beilageblech zu gestalten, welches eine die betreffende Brennraumöffnung umschließende, in ihrer Höhe federelastische Sicke aufweist, und die die Dichtungsplatte im Wesentlichen bildende Blechlage aus einem Metallblech ohne Federstahleigenschaften herzustellen. Dadurch lassen sich die folgenden Vorteile erzielen:
Wenn die die Dichtungsplatte im Wesentlichen bildende Blechlage nicht aus Federstahlblech besteht, sondern aus einem duktileren und infolgedessen leichter umformbaren Stahlblech, lassen sich die Umlagen um die Brennraum-öffnungen herum und die der Bildung von Abstützelementen dienenden Umlagen viel leichter herstellen als bei Verwendung eines Federstahlblechs, welches im Bereich des Biegeradius der zu erzeugenden Umlage erwärmt werden muss, um das Blech umfalten zu können; außerdem lässt sich ein verhältnismäßig breiter Umlageflansch eines Brennraum-Dichtelements im Falle der Verwendung eines Federstahlblechs nur dann ohne Rissbildung am freien Rand des Umlageflanschs herstellen, wenn das Blech auch in demjenigen Bereich, welcher später den freien Rand des Umlageflanschs bildet, zuvor erhitzt wird, damit es seine Federstahleigenschaften verliert. Hinzu kommt noch, dass Federstahlbleche wesentlich teurer sind als Stahlbleche ohne federelastische Eigenschaften. Für Motoren ohne Zylinderlaufbuchsen oder mit in den Motorblock (oft auch Kurbelgehäuse genannt) eingegossenen Laufbuchsen oder mit Top-Stop Linern, bei denen nicht die axiale Elastizität einer im eingebauten Zustand der Zylinderkopfdichtung vorgespannten Laufbuchse ausgenutzt werden kann, wird bei dieser erfindungsgemäßen Lösung die Höhenelastizität der Sicke des Federstahl-Beilageblechs ausgenutzt, um die Pressung des Brennraum-Dichtelements um die Brennraumöffnung herum zu vergleichmäßigen und die Abdichtwirkung des Brennraum-Dichtelements im Motorbetrieb auch dann noch zu gewährleisten, wenn beim höchsten, in einem Brennraum herrschenden Gasdruck (dem sogenannten Zünddruck) der über dem Brennraum-Dichtelement liegende Bereich der Dichtfläche des Zylinderkopfs einen größeren Abstand von dem unter dem Brennraum-Dichtelement liegenden Bereich der Dichtfläche des Motorblocks aufweist als in Bereichen in der Nachbarschaft von Zylinderkopfschrauben.

Besonders vorteilhafte Ausführungsformen einer solchen nicht erfindungsgemäßen Zylinderkopfdichtung zeichnen sich durch eines oder beide der folgenden Merkmale aus: Die Höhe der Sicke des Federstahl-Beilageblechs beträgt ungefähr 50% bis ungefähr 100% der Materialdicke des Beilageblechs, und die Materialdicke des Beilageblechs liegt in der Größenordnung von einem Zehntel bis zwei Zehntel der Materialdicke der die Dichtungsplatte im Wesentlichen bildenden Blechlage. Eine Sicke mit einer Höhe in dem vorstehend angegebenen Bereich lässt sich zum einen in einem Federstahlblech problemlos herstellen und sorgt zum anderen für eine für die Erfüllung der Abdichtfunktion des Brennraum-Dichtelements ausreichende Höhenelastizität des Letzteren, und durch ein Beilageblech mit einer verhältnismäßig geringen Materialdicke lässt sich eine zu große Dicke des Brennraum-Dichtelements (in gepresstem Zustand) vermeiden, die sonst zu Problemen in anderen, Abdichtzwecken dienenden Bereichen der Zylinderkopfdichtung oder zu einer ungenügenden Abstützung des Zylinderkopfs durch die Zylinderkopf-Abstützelemente im sogenannten Hinterland der Dichtungsplatte führen würde - unter Hinterlandbereichen der Dichtungsplatte werden solche Bereiche verstanden, welche einen beträchtlichen Abstand von einem Brennraum-Dichtelement bzw. von den Brennraum-Dichtelementen aufweisen und bei denen es sich insbesondere um periphere Bereiche der Dichtungsplatte handelt.

Ein zweiter Typ eines nicht erfindungsgemäßen Beispiels einer Zylinderkopfdichtung unterscheidet sich von dem vorstehend beschriebenen Typ einer Zylinderkopfdichtung dadurch, dass das Beilageelement ein Beilageblech ist, welches eine Sicke aufweisen, aber auch sickenlos sein kann, und ebenso wie die die Dichtungsplatte im Wesentlichen bildende Blechlage aus einem Metallblech ohne Federstahleigenschaften besteht.

Ein solcher Dichtungstyp eignet sich für Motoren, welche in den Zwischenschraubenbereichen von Motorblock und/oder Zylinderkopf hinreichend verformungssteif sind und entweder keine Zylinderlaufbuchsen oder solche Laufbuchsen aufweisen, die den vorstehend beschriebenen Rückfederungseffekt nicht zeigen oder nicht zeigen können, deren der Zylinderkopfdichtung zugewandte Stirnfläche sich im Laufe des Motorbetriebs aber auch nicht absenkt. Das Beilageblech dient bei diesem Dichtungstyp der Erhöhung der bei eingebauter Zylinderkopfdichtung auf das Brennraum-Dichtelement einwirkenden Pressungskräfte; da aber weder das Beilageblech noch die dieses aufnehmende Blechlage aus einem Federstahlblech besteht, hat das Brennraum-Dichtelement die Fähigkeit zu einer sogenannten Höhenpassung, worunter verstanden wird, dass sich beim Einbau der Zylinderkopfdichtung und/oder im Motorbetrieb die Dicke des Brennraum-Dichtelements aufgrund der bereichsweise unterschiedlich großen, auf das Brennraum-Dichtelement einwirkenden Pressungskräfte bereichsweise durch eine plastische Verformung des Brennraum-Dichtelements verändert und sich so an die bereichsweise unterschiedliche Breite oder Höhe des sogenannten Dichtspalts anpasst - unter dem Dichtspalt wird der durch die Zylinderkopfdichtung abzudichtende Spalt zwischen den Dichtflächen des Zylinderkopfs und des Motorblocks bzw. der Zylinderlaufbuchsen verstanden.

Auch bei diesem Dichtungstyp ist es von Vorteil, wenn die Materialdicke des Beilageblechs in der Größenordnung eines oder zweier Zehntel der Materialdicke der Blechlage liegt.

Der vorstehend geschilderte zweite Typ einer nicht erfindungsgemäßen Zylinderkopfdichtung kann auch so modifiziert werden, dass die Brennraum-Dichtelemente kein Beilageblech beinhalten. Eine derart modifizierte Zylinderkopfdichtung eignet sich für Laufbuchsenmotoren, bei denen die Zylinderlaufbuchsen verhätnismäßig weit über die der Zylinderkopfdichtung zugewandte Dichtfläche des Motorblocks überstehen, d.h. einen großen sogenannten Buchsenüberstand aufweisen, und insbesondere für Motoren mit Mid-Stop Linern oder Bottom-Stop Linern mit hinreichend großem Buchsenüberstand, denn dann übernimmt der Buchsenüberstand die Funktion des Beilageblechs, nämlich die elastische Erhöhung der auf das Brennraum-Dichtelement einwirkenden Pressungskräfte.

Ein dritter Typ einer Zylinderkopfdichtung weist erfindungsgemäß gleichfalls kein Beilageblech in den Brennraum-Dichtelementen auf, jedoch ist seine aus einem Metallblech ohne Federstahleigenschaften hergestellte Blechlage im Umlagebasisbereich mit einer die betreffende Brennraumöffnung umschließenden Sicke versehen, welche in Richtung auf den Umlageflansch vorspringt und, wegen des Fehlens eines Beilageblechs, diesem Umlageflansch unmittelbar benachbart ist. Ein derart gestaltetes Brennraum-Dichtelement hat die Fähigkeit zu einer noch besseren Höhenanpassung, da sich die Sicke plastisch abflachen lässt, und dennoch ist eine solche erfindungsgemäße Zylinderkopfdichtung äußert kostensparend herzustellen, da sie weder ein Beilageblech, noch den Einsatz teuren Federstahls erfordert.

Wie sich aus dem vorstehenden ergibt, eignet sich die erfindungsgemäße Zylinderkopfdichtung besonders für Laufbuchsenmotoren, und die Dichtungen werden dann so gestaltet, dass bei eingebauter Zylinderkopfdichtung deren Brennraum-Dichtelemente auf den oberen Stirnflächen, d.h. den Dichtflächen, der Zylinderlaufbuchsen aufliegen.

Ergänzend sei noch bemerkt, dass unter einem Motor mit einem Mid-Stop Liner ein solcher Motor verstanden werden soll, bei dem der axiale Abstand der Buchsendichtfläche einer Laufbuchse von derjenigen Stelle, an der die Laufbuchse am Motorblock abgestützt ist, mindestens einem Drittel der axialen Länge der Laufbuchse entspricht.

Weitere Merkmale, Vorteile und Einzelheiten der Erfindung ergeben sich aus den beigefügten Ansprüchen und/oder aus der nachfolgenden Beschreibung in der beigefügten Zeichnung dargestellter bevorzugter Ausführungsformen der erfindungsgemäßen Zylinderkopfdichtung und der für diese besonders geeigneten Motorkonstruktionen; in der Zeichnung zeigen:
- Figur 1: eine Draufsicht auf einen Teil einer ersten Ausführungsform einer erfindungsgemäßen Zylinderkopfdichtung;
- Figur 2: einen Schnitt nach der Linie 2-2 in Figur 1 eines Beispiels einer nicht erfindungsgemäßen Ausführungsform der Zylinderkopfdichtung;
- Figur 3: den Ausschnitt "A" aus Figur 2 in größerem Maßstab;
- Figur 4: einen Schnitt nach der Linie 4-4 in Figur 1, jedoch durch eine gegenüber der ersten Ausführungsform modifizierte Aus- führungsform der nicht erfindungsgemäßen Zylinderkopfdichtung;
- Figuren 5 - 6: der Figur 3 entsprechende Darstellungen einer dritten und vierten Ausführungsform der nicht erfindungsgemäßen Zylinderkopfdichtung;
- Figur 7: eine erfindungsgemäße Ausführungsform der Zylinderkopfdichtung, und
- Figuren 8-10: Teile eines Motorblocks, einer Zylinderlaufbuchse und einer Zylinderkopfdichtung in einem Schnitt längs einer Durch- messerebene eines Brennraums, wobei die Figur 8 einen Top- Stop Liner, die Figur 9 einen Mid-Stop Liner und die Figur 10 einen Bottom-Stop Liner zeigt und in allen drei Figuren eine Ausführungsform einer nicht erfindungsgemäßen Zylinder- kopfdichtung dargestellt ist.

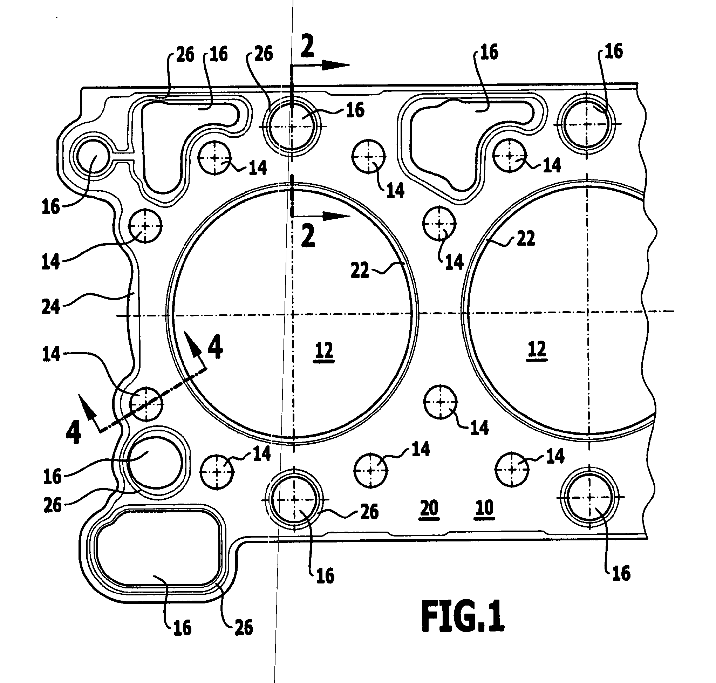

Die in Figur 1 gezeigte Zylinderkopfdichtung hat eine Dichtungsplatte 10 mit Brennraumöffnungen 12, Schraubenlöchern 14 für den Durchtritt von Zylinderkopfschrauben, sowie Fluid-Durchtrittsöffnungen 16 unterschiedlicher Gestalt und Anordnung für den Durchtritt von Kühlwasser bzw. Schmieröl. Der Vollständigkeit halber sei erwähnt, dass diese Zylinderkopfdichtung noch weitere Öffnungen, z.B. für den Durchtritt von Positionierstiften oder -schrauben, aber auch weitere Fluid-Durchtrittsöffnungen haben kann, z.B. eine Durchtrittsöffnung für Kühlwasser zwischen einander benachbarten Brennraumöffnungen. Außerdem sei darauf hingewiesen, dass erfindungsgemäße Zylinderkopfdichtungen insbesondere für größere Nutzfahrzeug-Motoren vorgesehen sind, so wie dies bei der in Figur 1 dargestellten Zylinderkopfdichtung der Fall ist, welche um die gemäß Figur 1 linke Brennraumöffnung 12 herum acht Schraubenlöcher 14 aufweist - bei kleineren Motoren, insbesondere für PKWs, weist eine Zylinderkopfdichtung üblicherweise um eine Brennraumöffnung herum nur vier Schraubenlöcher auf.

Wie sich aus dem Folgenden noch ergeben wird, weist bei der erfindungsgemäßen Zylinderkopfdichtung die Dichtungsplatte 10 nur eine einzige, sich über die gesamte Dichtungsplatte erstreckende Metallblechlage 20 auf, welche bei der in Figur 1 dargestellten Ausführungsform um jede Brennraumöffnung 12 herum zur Bildung eines Brennraum-Dichtelements 22 um- und auf sich selbst zurückgefaltet wurde und so eine sogenannte Umlage bildet, deren Querschnitt ungefähr einem liegenden U entspricht - diesbezüglich wird auf die folgenden Ausführungen verwiesen.

Bei der in Figur 1 dargestellten Ausführungsform der erfindungsgemäßen Zylinderkopfdichtung ist die Dichtungsplatte 10 an ihrer Peripherie mit einer weiteren, um den Umfang der Dichtungsplatte herum verlaufenden Umlage versehen, um dadurch ein Zylinderkopf-Abstützelement 24 zu bilden. Je nach Motorkonstruktion können aber mehrere kurze Abstützelemente ausreichend sein, die insbesondere an den Längsenden, d.h. den Schmalseiten, gegebenenfalls aber auch an einer der beiden Längsseiten oder an beiden Längsseiten der Dichtungsplatte 10 angeordnet sind. Alternativ oder zusätzlich kann eine erfindungsgemäße Zylinderkopfdichtung aber auch mit Zylinderkopf-Abstützelementen versehen sein, welche im Inneren der Dichtungsplatte 10 liegen, d.h. innerhalb deren Umfangsrand; z.B. können solche Abstützelemente an einigen oder allen Schraubenlöchern 14 vorgesehen sein, indem ein ein Schraubenloch umschließender Randbereich der Dichtungsplatte 10 oder Segmente eines solchen Randbereichs um- und auf die die Dichtungsplatte 10 bildende Blechlage zurückgefaltet werden. Alternativ oder zusätzlich können solche Abstützelemente an jeder beliebigen Stelle der Dichtungsplatte 10 vorgesehen werden, indem ein in der Draufsicht auf die Zylinderkopfdichtung z.B. U-förmiger Stanzschnitt in der Blechlage erzeugt und eine so gewonnene Blechzunge auf die Blechlage umgefaltet wird.

Eine Zylinderkopfdichtung von der Art, wie sie in Figur 1 dargestellt ist, weist um Fluid-Durchtrittsöffnungen 16 oder Gruppen solcher Durchtrittsöffnungen herum Abdichtelemente auf, welche von elastomeren Dichtraupen 26 gebildet werden, welche auf eine oder beide Seiten der die Dichtungsplatte 10 bildenden Metallblechlage aufgetragen und dann verfestigt (z.B. vulkanisiert) wurden.

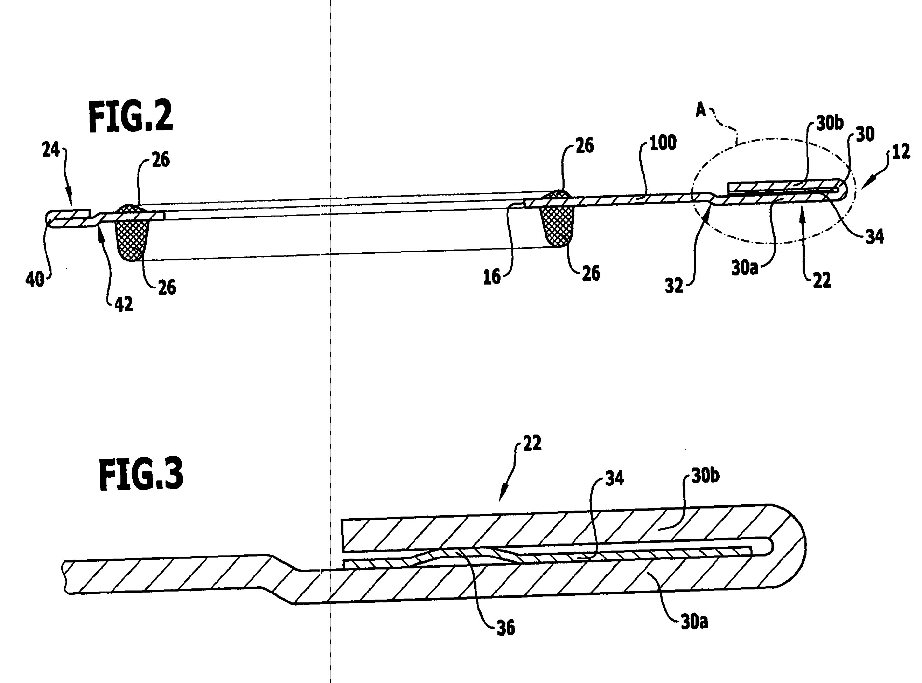

Der in Figur 2 dargestellte Schnitt (nach der Linie 2-2 in Figur 1) durch die Zylinderkopfdichtung gemäß Figur 1 zeigt eine Metallblechlage 100, welche die Dichtungsplatte 10 im Wesentlichen bildet und sich über die gesamte Dichtungsplatte (ausgenommen deren Öffnungen) erstreckt. Die Figur 2 zeigt, dass um die Fluid-Durchtrittsöffnung 16 herum mittels elastomeren Dichtraupen 26 abgedichtet wird, welche auf die beiden Seiten der Blechlage 100 aufgetragen und dort verfestigt wurden. Ferner zeigt die Figur 2 Details des Brennraum-Dichtelements 22 und des Zylinderkopf-Abstützelements 24.

Zur Bildung des Brennraum-Dichtelements 22 wurde um die Brennraum-öffnung 12 herum ein insbesondere kreisringförmiger Bereich der Blechlage 100 um 180° um- und auf die Blechlage zurückgefaltet, so dass eine sogenannte Umlage 30 entsteht, welche oberhalb eines Umlage-Basisbereichs 30a einen Umlageflansch 30b aufweist. Damit das Brennraum-Dichtelement 22 über die beiden Seiten des benachbarten ebenen Bereichs der Blechlage 100 gleich weit übersteht, wurde die Blechlage 100 zwischen diesem ebenen Bereich und dem Brennraum-Dichtelement 22 mit einer Abkröpfung 32 versehen.

Zwischen den Umlage-Basisbereich 30a und den Umlageflansch 30b ist bei einer bevorzugten Ausführungsform eines nicht erfindungsgemäßen Brennraum-Dicht-elements ein insbesondere gleichfalls kreisringförmiges Beilageblech 34 eingelegt, welches die Figur 3 noch besser erkennen lässt. Dieses Beilageblech 34 besteht aus einem Federstahlblech, während für die Herstellung der Blechlage 100 ein Stahlblech ohne Federstahleigenschaften verwendet wurde. Deshalb bildet die Sicke 36 ein Federelement, welches bei stark gepresstem Brennraum-Dichtelement 22 in gemäß Figur 3 vertikaler Richtung etwas zusammengedrückt werden kann, bei gering gepresstem Brennraum-Dichtelement jedoch wieder auffedert und dann den Umlageflansch 30b gemäß Figur 3 etwas nach oben drücken kann - die Sicke 36 verleiht also dem Brennraum-Dichtelement 22 in gemäß Figur 3 vertikaler Richtung gewisse federelastische Eigenschaften. Außerdem wird durch das Beilageblech 34 die Dicke des Brennraum-Dichtelements 22 im stark gepressten Zustand etwas vergrößert (gegenüber Ausführungsformen ohne Beilageblech), wodurch die auf das Brennraum-Dichtelement bei eingebauter Zylinderkopfdichtung einwirkenden Pressungskräfte erhöht werden. Dadurch wird erreicht, dass diese Zylinderkopfdichtung um die Brennraumöffnungen 12 herum ihre größte Dicke aufweist - sieht man einmal von der Dicke der Dichtung im Bereich der Dichtraupen 26 ab.

Auch zur Bildung des Zylinderkopf-Abstützelements 24 wurde die Blechlage 100 mit einer Umlage 40 versehen, jedoch enthält das Abstützelement 24 im Gegensatz zum Brennraum-Dichtelement 22 keine Einlage oder Beilage. Zwischen dem Abstützelement 24 und dem benachbarten ebenen Bereich der Blechlage 100 wurde letztere jedoch gleichfalls mit einer Abkröpfung 42 versehen.

Bei dieser Ausführungsform der nicht erfindungsgemäßen Zylinderkopfdichtung ist deren Dicke im Bereich der Brennraum-Dichtelemente 22 größer als im Bereich des Abstützelements 24 (oder anderer, ähnlicher Zylinderkopf-Abstützelemente), jedoch kleiner als in den Bereichen der elastomeren Dichtraupen 26, welche schon durch verhältnismäßig geringe Pressungskräfte verformt werden können und nur vor übermäßigen Verformungen geschützt werden müssen - diese Aufgabe übernehmen die Brennraum-Dichtelemente 22 und das Abstützelement (bzw. die Abstützelemente) 24.

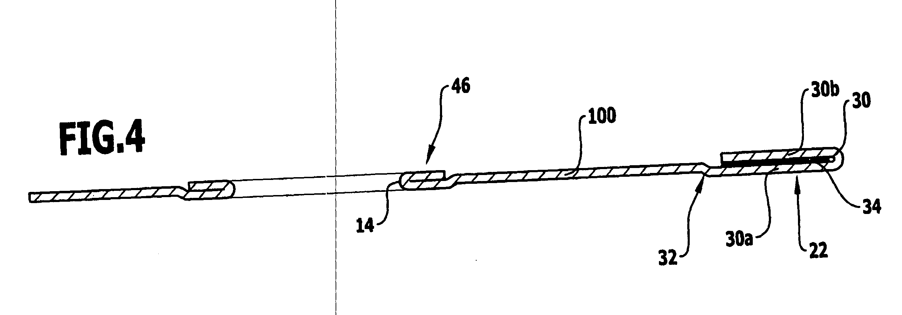

Bei der in Figur 4 dargestellten Modifikation der nicht erfindungsgemäßen Zylinderkopfdichtung gemäß den Figuren 1 bis 3 fehlt in dem in Figur 4 gezeigten Bereich der Peripherie der Dichtungsplatte 10 ein Zylinderkopf-Abstützelement; stattdessen ist bei dieser Modifikation um das in Figur 4 gezeigte Schraubenloch 14 herum die Blechlage 100 mit einem Zylinderkopf-Abstützelement 46 versehen, welches das Schraubenloch 14 umschließt. Zur Bildung des Abstützelements 46 wurde die Blechlage 100 mit einer Umlage entsprechend der Umlage 40 des Abstützelements 24 versehen. An die Stelle einer kreisringförmigen Umlage 46 könnten auch mehrere Umlagesegmente treten, die längs des Umfangs des Schraubenlochs 14 im Abstand voneinander angeordnet sind und von umgebogenen Blechlappen der Blechlage 100 gebildet werden.

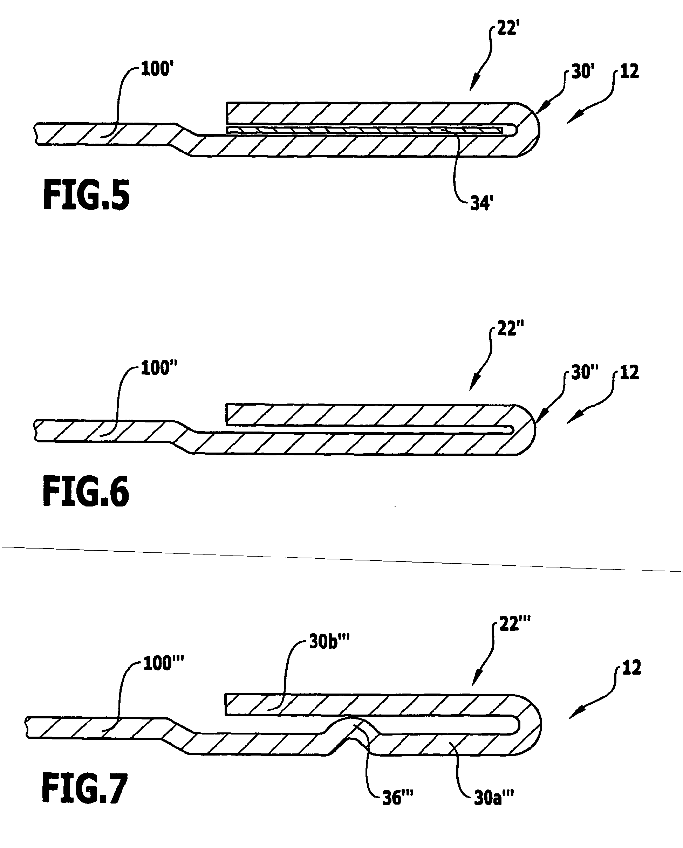

Die in den Figuren 5 bis 7 dargestellten Modifikationen des Brennraum-Dichtelements 22 gemäß den Figuren 2 und 3 werden im Folgenden nur insoweit beschrieben werden, als diese Modifikationen von dem Brennraum-Dichtelement 22 gemäß den Figuren 2 und 3 abweichen.

Die Figur 5 zeigt eine Metallblechlage 100', welche mit einem Brennraum-Dichtelement 22' versehen ist und aus einem Stahlblech ohne federelastische Eigenschaften bestehen soll. In die der Bildung des Brennraum-Dichtelements 22' dienende Umlage 30' ist ein Beilageblech 34' eingelegt, welches insgesamt eben ist und gleichfalls aus einem Stahlblech ohne federelastische Eigenschaften bestehen kann. Bei dieser Ausführungsform hat das Brennraum-Dichtelement 22' keine höhenelastischen Eigenschaften, es kann aber beim Einbau der Zylinderkopfdichtung und/oder im Motorbetrieb in gemäß Figur 5 vertikaler Richtung ebenso wie der die Umlage 30' bildende Bereich der Blechlage 100' plastisch etwas deformiert werden und ermöglicht so eine sogenannte Höhenanpassung.

Die Ausführungsform gemäß Figur 6 unterscheidet sich von derjenigen gemäß Figur 5 nur dadurch, dass das Brennraum-Dichtelement 22" der Blechlage 100" innerhalb der Umlage 30" keine Einlage enthält, das heißt ohne ein Beilageblech ist. Die beiden Ausführungsformen nach den Figuren 5 und 6 unterscheiden sich also nur dadurch, dass die Ausführungsform gemäß Figur 6 ein Brennraum-Dichtelement 22" geringerer Dicke aufweist.

Schließlich unterscheidet sich die erfindungsgemäße Ausführungsform gemäß Figur 7 von derjenigen gemäß Figur 6 dadurch, dass ein Umlage-Basisbereich 30a"' des Brennraum-Dichtelements 22'" eine die Brennraumöffnung 12 umschließende Sicke 36'" aufweist, welche erfindungsgemäß ebenso wie die Sicke 36 (siehe Figur 3) in Richtung auf den Umlageflansch 30b"' des Brennraum-Dichtelements 22'" vorspringt, jedoch, da die Blechlage 100'" nicht aus einem Federstahlblech bestehen soll, keine höhenelastischen Eigenschaften aufweist, sondern sich beim Einbau der Zylinderkopfdichtung und/oder im Motorbetrieb plastisch zumindest etwas abflachen lässt.

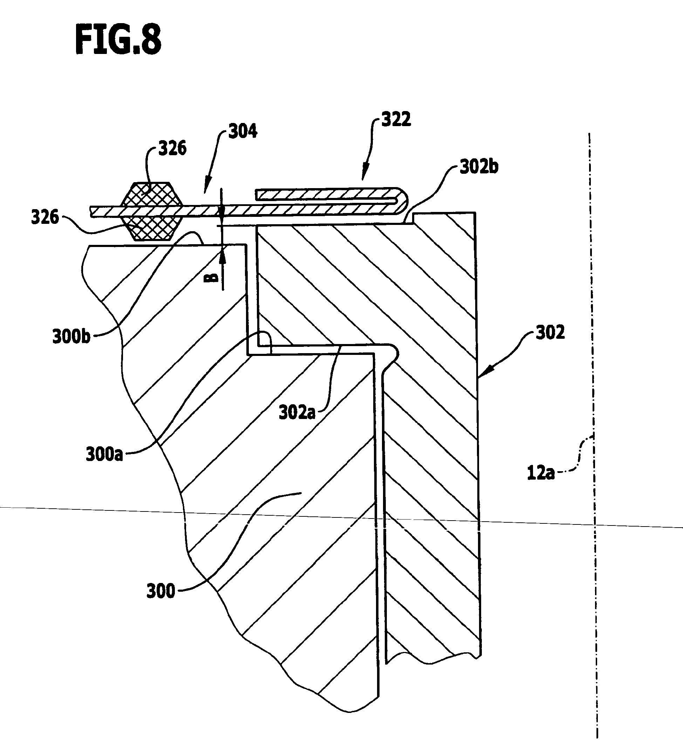

Die Figuren 8 bis 10 zeigen jeweils Teile eines Motorblocks 300 bzw. 300' bzw. 300", einer Zylinderlaufbuchse 302 bzw. 302' bzw. 302" und einer sehr vereinfacht dargestellten nicht erfindungsgemäßen Zylinderkopfdichtung 304 bzw. 304' bzw. 304". In jeder der Figuren 8 bis 10 wurde eine Achse des von der Laufbuchse umgebenen Brennraums mit 12a bezeichnet. Außerdem liegt bei allen drei Ausführungsformen ein erfindungsgemäßes Brennraum-Dichtelement 322 der Zylinderkopfdichtung auf der jeweiligen Laufbuchse auf und liegen elastomere Dichtraupen 326 der Zylinderkopfdichtung über dem Motorblock.

Die Zylinderlaufbuchse 302 der Ausführungsform gemäß Figur 8 ist ein sogenannter Top-Stop Liner; sie hat einen oberen sogenannten Buchsenbund 302a, welcher an eine eine Dichtfläche bildende obere Stirnfläche 302b der Laufbuchse 302 angrenzt und mit dem sich die Laufbuchse auf einer Schulter 300a des Motorblocks 300 abstützt, welche gegenüber einer Dichtfläche 300b des Motorblocks abgesenkt ist, und zwar um ein solches Maß, dass sich ein sogenannter Buchsenüberstand B ergibt, um welchen die Stirnfläche 302b der Laufbuchse 302 die Dichtfläche 300b des Motorblocks 300 überragt.

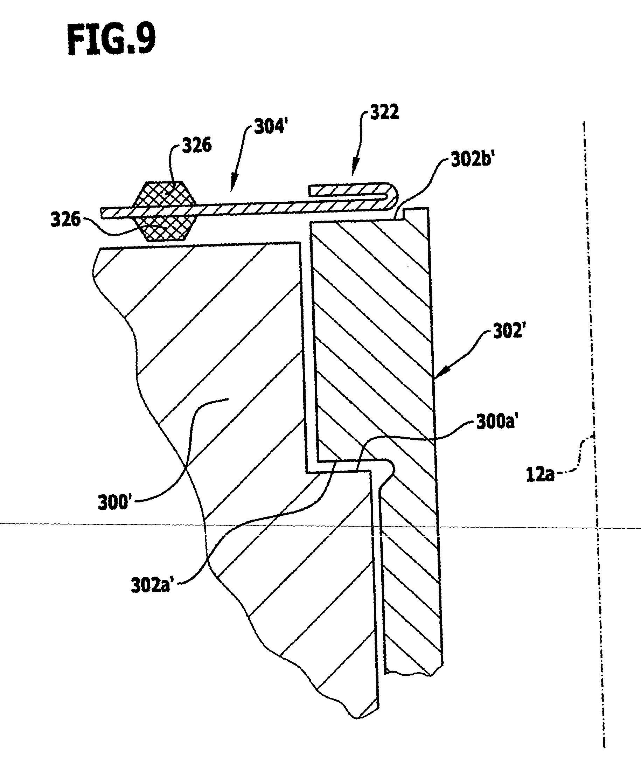

Die Ausführungsform gemäß Figur 9 unterscheidet sich von derjenigen gemäß Figur 8 nur dadurch, dass sich die Laufbuchse 302' in einem erheblichen Abstand von ihrer oberen Stirnfläche 302b' am Motorblock 300' abstützt, und zwar über eine Schulter 302a', welche auf einer Schulter 300a' des Motorblocks aufliegt. Bei einem solchen sogenannten Mid-Stop Liner ist der Abstand der Schulter 302a' von der Stirnfläche 302b' zum Beispiel ungefähr ein Drittel bis ungefähr die Hälfte der gesamten axialen Länge (nicht dargestellt) der Laufbuchse 302'.

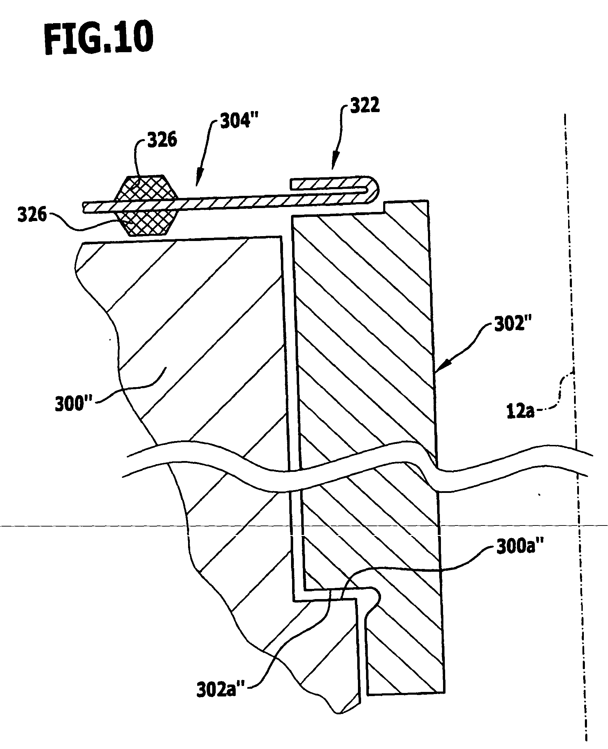

Schließlich unterscheidet sich die Ausführungsform gemäß Figur 10 von derjenigen gemäß Figur 9 nur dadurch, dass die Schultern 300a" und 302a" nahe dem unteren Ende der Laufbuchse 302" angeordnet sind, weshalb eine solche Laufbuchse als Bottom-Stop Liner bezeichnet wird.

Bei einem fertig montierten Motor gemäß den in den Figuren 9 und 10 dargestellten Ausführungsformen ist derjenige Längsbereich der Laufbuchse 302' bzw. 302", welcher sich über der Schulter 302a' bzw. 302a" befindet, in axialer Richtung, das heißt in Richtung der Brennraumachse 12a, vorgespannt und kann sich beispielsweise im Motorbetrieb in vertikaler Richtung nach oben elastisch etwas ausdehnen, wenn beim Zünddruck in dem der Laufbuchse zugeordneten Brennraum der über letzterem liegende Bereich des Zylinderkopfs etwas nach oben gedrückt wird und ohne diese elastische Längsdehnung der Laufbuchse das Brennraum-Dichtelement 322 sonst zu stark entlastet werden würde. Bei einem Mid-Stop Liner oder einem Bottom-Stop Liner kann man deshalb gegebenenfalls darauf verzichten, das Brennraum-Dichtelement so zu gestalten, dass es dicken- bzw. höhenelastische Eigenschaften aufweist. Wie bereits erwähnt, sind erfindungsgemäße Zylinderkopfdichtungen insbesondere für Nutzfahrzeug-Motoren vorgesehen. Besonders geeignet sind solche erfindungsgemäße Zylinderkopfdichtungen, bei denen der Umlageflansch eines Brennraum-Dichtelements eine Breite (bzgl. der Brennraum-öffnung in radialer Richtung) aufweist, welche mindestens 6 mm beträgt und vorzugsweise im Bereich zwischen 6 und 8 mm liegt. Wie bereits vorstehend geschildert wurde, lassen sich derart breite Umlagen an einem Federstahlblech nicht oder nur mit verhältnismäßig großem Aufwand herstellen.

Wenn vorstehend davon die Rede war, dass die die Dichtungsplatte im Wesentlichen bildende Metallblechlage und gegebenenfalls ein Beilageblech von Metallblechen gebildet werden, so soll dadurch nicht ausgeschlossen werden, dass diese Metallbleche ein- oder beidseitig, insgesamt oder nur bereichsweise eine Beschichtung aufweisen, welche insbesondere aus einem elastomeren Material besteht (derartige dünne elastomere Beschichtungen sind bei metallischen Zylinderkopfdichtungen bekannt, sie dienen meist der sogenannten Mikroabdichtung für den Fall, dass eine gegenüberliegende metallische Dichtfläche nicht vollständig eben ist, sondern eine gewisse Oberflächenrauhigkeit und/oder Poren aufweist).

Für die erfindungsgemäß zu verwendenden Metallbleche ohne Federstahleigenschaften eignen sich vor allem solche Stahlbleche, welche eine Bruchdehnung von mindestens 20%, insbesondere von mindestens 30% aufweisen (Bruchdehnung gemäß A80, definiert in der Europäischen Norm EN 10088-2, bei der es sich auch um eine DIN-Norm handelt).

## Patentansprüche

1. Zylinderkopfdichtung mit einer mit mehreren Brennraum-Öffnungen (12) versehenen Dichtungsplatte, welche eine einzige, sich mindestens im Wesentlichen über die gesamte Dichtungsplatte erstreckende Metallblechlage (100"') aufweist, von der zur Bildung von Brennraum-Dichtelementen (22"') jeweils ein die jeweilige Brennraum-Öffnung umschließender Öffnungsrandbereich um- und auf die Blechlage zurückgefaltet ist, so dass jedes Brennraum-Dichtelement einen einem Umlagebasisbereich (30a"') der Blechlage gegenüberliegenden Umlageflansch (30b"') aufweist, wobei zur Bildung von Zylinderkopf-Abstützelementen (24) im Abstand von einem die Brennraum-Öffnungen enthaltenden Bereich der Dichtungsplatte Randbereiche der Blechlage um- und auf die Blechlage zurückgefaltet sind, und wobei an der Blechlage mindestens eine elastomere Dichtraupe (26) zur Abdichtung um mindestens eine Fluidöffnung (16) der Dichtungsplatte herum angebracht ist,
**dadurch gekennzeichnet, dass** für einen mit Zylinderlaufbuchsen (302; 302'; 302") versehenen Motor die Blechlage (100"') von einem Metallblech ohne Federstahleigenschaften gebildet wird, der Umlagebasisbereich (30a'") eine die betreffende Brennraum-öffnung (12) umschließende Sicke (36"') aufweist, welche in Richtung auf den Umlageflansch (30b"') vorspringt und diesem unmittelbar benachbart ist, und dass das Brennraum-Dichtelement (22"') in der Dichtungsplatte zur Auflage auf einer der Zylinderkopfdichtung zugewandten Stirnfläche (302b; 302b'; 302b") einer Zylinderlaufbuchse angeordnet ist.

2. Zylinderkopfdichtung nach Anspruch 1, **dadurch gekennzeichnet, dass** die Dicke der ungepressten, nicht eingebauten Dichtung im Bereich eines Brennraum-Dichtelements (22"') höchstens gleich groß ist wie im Bereich einer elastomeren Dichtraupe (26) und größer ist als im Bereich eines Zylinderkopf-Abstützelements (24).

3. Zylinderkopfdichtung nach Anspruch 1 oder 2 für einen Motor, bei dem die Laufbuchsen (302) an ihren der Dichtung zugewandten axialen Endbereichen, in axialer Richtung an die Buchsenstirnfläche (302b) angrenzend am Buchsenaußenumfang einen in radialer Richtung vorspringenden Bund (302a) aufweisen, mit dem sich die Laufbuchsen in axialer Richtung an einem Motorblock (300) abstützen.

4. Zylinderkopfdichtung nach Anspruch 1 oder 2 für einen Motor, bei dem die Laufbuchsen (302'; 302") in ihrer axialen Richtung in einem axialen Abstand von der Buchsenstirnfläche (302b'; 302b") an einem Motorblock (300', 300") abgestützt sind, welcher mindestens einem Drittel der axialen Länge der Laufbuchsen entspricht.

## Claims

1. Cylinder head gasket with a gasket plate provided with a plurality of combustion chamber openings (12) and having a single sheet metal layer (100"') extending at least substantially over the entire gasket plate, a respective opening edge area, enclosing the respective combustion chamber opening, of the sheet metal layer being folded over and back onto the sheet metal layer in order to form combustion chamber sealing elements (22"'), so that each combustion chamber sealing element has a foldover flange (30b'") lying opposite a foldover base area (30a"') of the sheet metal layer, edge areas of the sheet metal layer being folded over and back onto the sheet metal layer in order to form cylinder head supporting elements (24) at a distance from an area of the gasket plate containing the combustion chamber openings, and at least one elastomeric sealing bead (26) for sealing around at least one fluid opening (16) of the gasket plate being attached to the sheet metal layer,
**characterized in that** for an engine provided with cylinder liners (302; 302'; 302"), the sheet metal layer (100"') is formed by a sheet metal without spring steel properties, the foldover base area (30a"') has a bead (36"') which encloses the respective combustion chamber opening (12), projects in a direction towards the foldover flange (30b"') and is immediately adjacent thereto, and **in that** the combustion chamber sealing element (22"') is arranged in the gasket plate to rest on an end face (302b; 302b'; 302b") of a cylinder liner.

2. Cylinder head gasket in accordance with claim 1, **characterized in that** the thickness of the uncompressed, unmounted gasket in the area of a combustion chamber sealing element (22"') is at the most the same size as in the area of an elastomeric sealing bead (26) and is larger than in the area of a cylinder head supporting element (24).

3. Cylinder head gasket in accordance with claim 1 or 2 for an engine in which the liners (302) have, in their axial end areas facing the gasket, on the outer liner circumference a collar (302a) adjoining the liner end face (302b) in an axial direction and projecting in a radial direction, the liners being supported with the collar in an axial direction on an engine block (300).

4. Cylinder head gasket in accordance with claim 1 or 2 for an engine in which the liners (302'; 302") are supported in their axial direction on an engine block (300', 300") at an axial distance from the liner end face (302b'; 302b") which corresponds to at least one third of the axial length of the liners.

## Revendications

1. Joint de culasse, comportant une plaque d'étanchéité, qui est munie d'ouvertures (12) de chambre de combustion et comporte une seule couche métallique (100"'), qui s'étend au moins sensiblement sur toute la plaque d'étanchéité, et dont chaque région marginale entourant l'ouverture de chambre de combustion respective est repliée sur la couche métallique pour former un élément d'étanchéité (22"') pour chambre de combustion, de telle sorte que chaque élément d'étanchéité pour chambre de combustion comporte un collet rabattu (30b"'), situé en face d'une zone de base (30a"') de la couche métallique, sachant que pour former des éléments d'appui (24) de la culasse à distance de la zone de la plaque d'étanchéité, contenant les ouvertures de chambre de combustion, des zones de bordure de la couche métallique sont pliées et repliées sur la couche métallique, et sachant que sur la couche métallique est déposée au moins un joint d'étanchéité (26) élastomère pour assurer l'étanchéité au moins autour d'une ouverture pour fluide (16) de la plaque d'étanchéité,
**caractérisé en ce que** pour un moteur muni de chemises de cylindre (302 ; 302' ; 302" »), la couche métallique (100"') est formée par une tôle métallique sans les propriétés d'un acier à ressort, la zone de base (30a"') comporte une nervure (36"') qui entoure l'ouverture (12) de chambre de combustion concernée et qui s'avance vers le collet rabattu (30b"') et est directement adjacente à celui-ci, et **en ce que** l'élément d'étanchéité (22"') pour chambre de combustion est agencé dans la plaque d'étanchéité pour venir en appui sur une face frontale (302b ; 302b' ; 302b"), orientée vers le joint de culasse, d'une chemise de cylindre.

2. Joint de culasse selon la revendication 1, **caractérisé en ce que** l'épaisseur du joint non monté, non comprimé, dans la zone d'un élément d'étanchéité (22"') pour chambre de combustion est au maximum égale à celle dans la zone d'un joint d'étanchéité (26) élastomère et supérieure à celle dans la zone d'un élément d'appui (24) de la culasse.

3. Joint de culasse selon la revendication 1 ou 2 pour un moteur, dans lequel les chemises de cylindre (302), au niveau de leur zone d'extrémité axiale orientée vers le joint, comportent un collet de butée (302a), qui s'avance dans le sens radial, réalisé sur le pourtour extérieur de la chemise de cylindre de manière adjacente dans le sens axial à la face frontale (302b) de la chemise de cylindre et avec lequel les chemises de cylindre prennent appui dans le sens axial sur un bloc-moteur (300).

4. Joint de culasse selon la revendication 1 ou 2 pour un moteur, dans lequel les chemises de cylindre (302' : 302"), dans leur direction axiale, prennent appui, à une distance axiale de la face frontale (302b' ; 302b") de la chemise de cylindre, sur un bloc-moteur (300', 300") qui correspond au moins à un tiers de la longueur axiale des chemises de cylindre.
